# EUROPEAN PATENT SPECIFICATION

(11) **EP 1 396 149 B1**
(45) Date of publication and mention of the grant of the patent: **23.07.2014**
(21) Application number: 02726614.7
(22) Date of filing: 12.03.2002
(51) Int. Cl.: H04N 7/18

(54) **DIGITAL VIDEO RECORDING**
DIGITALE VIDEOAUFZEICHNUNG
ENREGISTREMENT VIDEO NUMERIQUE

(30) Priority: 14.03.2001 US 808326
(43) Date of publication of application: 10.03.2004
(73) Proprietor: Tyco Fire & Security GmbH, 8212 Neuhausen am Rheinfall (CH)
(72) Inventor: HOBSON, Gregory, L., St. Charles, MO 63304 (US); MOORE, Jerry, Florissant, MO 63034 (US); WOOTTON, John, R., St. Louis, MO 63141 (US); MYERS, James, C., Florissant, MO 63034 (US); ORTH, Jeffrey, Fenton, MO 63026 (US)
(74) Representative: Hedges, Martin Nicholas
(86) International application number: PCT/US2002/007483
(87) International publication number: WO 2002/073950

(56) References cited:
- EP-A- 0 805 405
- WO-A-01/06790
- US-A- 5 243 418
- US-A- 5 371 551
- US-A- 5 880 775
- US-A- 5 917 958
- US-A- 5 996 023
- US-A- 6 141 046

## Description

### Technical Field

This invention relates to video recording, and more particularly, to a digital video recording system for use at Point of Sale (POS) locations, Automated Teller Machines (ATM's), and other locations where the monitoring of activities is important.

### Background Art

Video recording equipment is in common use throughout industry and commerce. Conventional video recording systems are analog systems employing a video recorder which records images on a magnetic tape. The recorder used is a slow scan recorder whose video input is provided by a camera located at the POS or ATM. Recording is typically continuous over a predetermined period which is typically 24 hours. If nothing of significance occurs during the recording period, the tape is simply rerun again through the recorder with the prior recorded images being recorded over.

This process has a number of problems associated with it. In most installations, most of the time, nothing ever happens. Rather, the same tape is used over and over with the same background image being recorded over and over. Only if something of significance happens is the tape removed and replaced. Preferably, each tape should be removed, degaussed, and reinserted in the recorder at the end of each recording interval. Or, each tape is changed every day with the tape removed being degaussed before its next use. However, this is seldom done because of the expense or impracticality of doing so.

Because the same images are continuously being recorded, over time, the magnetic particles in the tape tend to align themselves in a particular orientation consistent with those images. This residual magnetization degrades the resolution capability of the tape and resulting quality of the recorded images. One problem law enforcement officers or security personnel have with the recording systems described above is that the poor quality of the recorded images makes it difficult to discern features or details of the events captured on the tape, including the identification of persons.

Another problem with conventional recording systems is that simply because an event of significance has occurred, recording does not stop. Thus, in order to view the event, it is necessary to rewind the tape and scan through it to the place where the event is recorded. In situations where time may be critical, the resulting delay is very undesirable.

U.S. Patent No. 5,996,023 to Winter et al*.* teaches the use of circular pre-alarm buffering at high frame rates. The circular pre-alarm buffer is used to delay a signal until a set time has passed and a decision can be made as to the occurrence of an activity of interest. The circular pre-alarm buffer is continuously overwritten unless an alarm input triggers the contents to be marked for permanent storage. In this manner, high frame rate recordings (15 fps or more) can be made during the time of interest. The '023 *Winter et al.* patent specifically rejects the use of continuous recording at low frame rates (e.g. 1 fps) as outlined as possibly missing important data. The teachings of the '023 *Winter et al.* patent also discuss the detection of motion. However, there is no indication of how the motion detection is performed and specifically, the motion is not used to aid in the size reduction of the stored data. It is used to provide event related information for storage with the image.

United States Patent No. US 5,371,551 to Logan *et*. *al* teaches the use of a buffer to provide a time delay in viewing stored images with pause, reverse, and thumbnail functions. The '551 *Logan et al.* patent also teaches that read-out rates may be different than input rates to accommodate a limited storage capacity. The '551 *Logan et al.* system cannot be readily adapted to systems with a large or unlimited storage capacity configured for continuous activity recording.

United States Patent No. 6,101,276 to Adiletta teaches the detection of motion through comparison with a reference image, using macro blocks to determine two types of macro block coding, spatial and temporal. Spatial blocks are coded by encoding the raw block itself. Temporal blocks are coded by finding motion' vectors relative to a reference block and then encoding the error between the reference block and the temporal block. The blocks are encoded by comparing them to reference images and assigning a code to each block. The complexity of the identification of motion vectors is processor intensive, and the use of these operations requires specialized hardware, with some of the processing being done in software.

United States Patent No. 6, 125,145 to Koyanagi also teaches the use of motion detection using a complex algorithm for brightness and color information. The '145 *Koyanagi* patent further teaches the use of motion range detection at various distances from the camera using a plurality of ranges. The '145 *Koyanagi* patent uses of one of three operator selected methods for updating the reference image, unconditional, conditional, or none. Reliance upon an operator selected method for updating a reference image introduces a source of error into the system, as the environmental conditions in an image field may change such that the update method originally selected by the operator is no longer the best method.

United States Patent No. 5,731,832 to Ng teaches the generation of a difference matrix of average differences between reference-frame macro blocks and current-frame macro blocks to detect motion. This may be used for intrusion detection. As an ancillary function, the current image is recorded if the difference matrix profile exceeds a threshold. Of note is that the entire image is recorded rather than only the difference portions as in the present invention. Also, only the image containing the detected motion is recorded and there is no continuous recording of image data, which may cause the loss of important context information contained in either previous of subsequent image frames.

Finally, United States Patent No. 5,229,850 to Toyoshima teaches the use of an external sensor to detect the occurrence of an event to be monitored and to trigger the recording of an image associated with the event, adding to the complexity of the system.

WO 01/06790, upon which the precharacterising portion of claim 1 is based discloses a digital video recording system employing at least one camera directed at a scene of interest to view the scene and to continuously generate a plurality of video images thereof with each of said video images comprising a plurality of pixel elements, said system comprising; an image processor for processing the video images for the at least one camera, the video processor establishing a first video image as a reference image against which the contents of subsequent video images are compared, the image processor dividing the reference image and the subsequent video images into a plurality of segments with each segment being comprised of a block of pixels, the image processor then comparing the block of pixels comprising a segment of each subsequent video image against the block of pixels forming the corresponding segment of the reference image of said scene to determine if any changes have occurred in the scene, the processor being configured to identify which of said segments in said video images have changed relative to the corresponding segments of the reference image; a memory in which is stored the contents of the reference image and the segments of any subsequent video image identified by the image processor as indicative of a change in the scene, the subsequent video images being identified as to the time at which the video image was obtained by the camera, and the contents of each video image stored in said memory being authenticated so as to insure that its contents cannot be subsequently tampered without evidence of any tampering not becoming known, authentication data for each video image stored in said memory being stored with the contents of each video image; and display means for displaying any subsequent video images stored in said memory with said image processor being further configured to access said memory to retrieve any stored subsequent video images for display on the display means, said image processor accessing the contents of said memory at any desired memory location representing a time of interest so as not to have to scan the stored video images to locate the video image obtained at the time of interest, said image processor configured to access the contents of said memory without interrupting processing of currently acquired video images, and with the display means displaying the video images at a first frame rate while the image processor is simultaneously processing new video images obtained by said camera at a second and different frame rate.

In accordance with the present invention there is provided a digital video recording system employing at least one camera directed at a scene of interest to view the scene and to continuously generate a plurality of video images thereof with each of said video images comprising a plurality of pixel elements, said system comprising; an image processor for processing the video images for the at least one camera, the video processor establishing a first video image as a reference image against which the contents of subsequent video images are compared, the image processor dividing the reference image and the subsequent video images into a plurality of segments with each segment being comprised of a block of pixels, the image processor then comparing the block of pixels comprising a segment of each subsequent video image against the block of pixels forming the corresponding segment of the reference image of said scene to determine if any changes have occurred in the scene, the processor being configured to identify which of said segments in said video images have changed relative to the corresponding segments of the reference image; a memory in which is stored the contents of the reference image and the segments of any subsequent video image identified by the image processor as indicative of a change in the scene, the subsequent video images being identified as to the time at which the video image was obtained by the camera, and the contents of each video image stored in said memory being authenticated so as to insure that its contents cannot be subsequently tampered without evidence of any tampering not becoming known, authentication data for each video image stored in said memory being stored with the contents of each video image; and display means for displaying any subsequent video images stored in said memory with said image processor being further configured to access said memory to retrieve any stored subsequent video images for display on the display means, said image processor accessing the contents of said memory at any desired memory location representing a time of interest so as not to have to scan the stored video images to locate the video image obtained at the time of interest, said image processor configured to access the contents of said memory without interrupting processing of currently acquired video images, and with the display means displaying the video images at a first frame rate while the image processor is simultaneously processing new video images obtained by said camera at a second and different frame rate; characterised in that the system includes a plurality of cameras directed to view at least one scene, image date from each camera being stored in a separate storage area of the memory and in that the image processor is configured to compare said plurality of video images generated by said cameras with a plurality of previously established reference images of said scene to identify any regions of change therein, said processor configured to store the contents of the reference images and the contents of only those regions of said video images which differ from a corresponding region of the reference images in the storage area of the memory associated with the respective cameras, said image processor being further configured to access said memory to retrieve at least one video image of interest produced by said cameras.

The present invention still further provides a method of recoding video images and storing and retrieving the same using the digital video recording system of the invention, said method comprising: viewing a scene of interest with a plurality of cameras and generating video images thereof; converting each frame of video imagery produced by said cameras and generating video images thereof as a digital signal; processing said digital signal, said processing including comparing segments of each said video image with corresponding segments of a previously established reference image of the scene to determine if any changes have occurred in any of the segments, and storing the contents of said segments in which differences have occurred in a storage area of a memory, said storage area being associated with the camera from which the signal was captured, date and time information being appended to each stored video image; authenticating the contents of each video image stored in said memory so as to insure that its contents cannot be subsequently tampered without evidence of any tampering not becoming known, authentication data for each video image stored in said memory being stored with the contents of each video image; and accessing said memory to retrieve the contents of said digital signals to recreate the video images simultaneously with digital signals being stored therein, and said memory being accessed at any desired location there within representing a time of interest whereby video images stored in said memory do not have to be sequentially scanned to locate a video image of interest, and whereby said video images are acquired from said at least one camera (12a-12n) at one frame rate and from said memory at a second and different frame rate.

In order that the invention may be well understood, there will now be described embodiments thereof, given by way of example, reference to the accompanying drawings, in which:
Figure 1 is a representation of an installation with which a DVR system of a similar type to the present invention is used;
Figure 2 is a simplified block diagram of a prior art recording system;
Figure 3 is a block diagram of a DVR system which does not fall within the scope of the present invention;
Figure 4 illustrates the frame rate at which video images are acquired and processed and at which they are retrieved and played back;
Figure 5 is a block diagram of a system according to the present invention; and
Figure 6A and 6B represent a reference image obtained by the camera (Figure 6A), and an image (figure 6B) processed by the system to determine if there are any differences with respect to the reference.

Corresponding reference characterizes indicate corresponding parts throughout the drawings.

Referring to the drawings, a conventional monitoring system S utilizes a camera C which views a scene of interest. In security systems, this could be the interior of a bank, an Automatic Teller Machine (ATM), the counter of a fast food store, etc. Video images produced by the camera are transmitted to recorder R which can be on the premises or remotely located. The images are recorded on a magnetic tape M or the like. When the tape is full, it is rewound and recorded over; or it is stored away and replaced with a new tape. If something of consequence occurs, in order to view it, the tape is transferred to a playback unit P where it is rewound to the beginning. The tape is then scanned to the point where recordation of the occurrence commences for viewing by interested parties. As noted, if the tape is simply recorded on over and over, the recorded image is degraded and vital information may be lost or rendered incomprehensible.

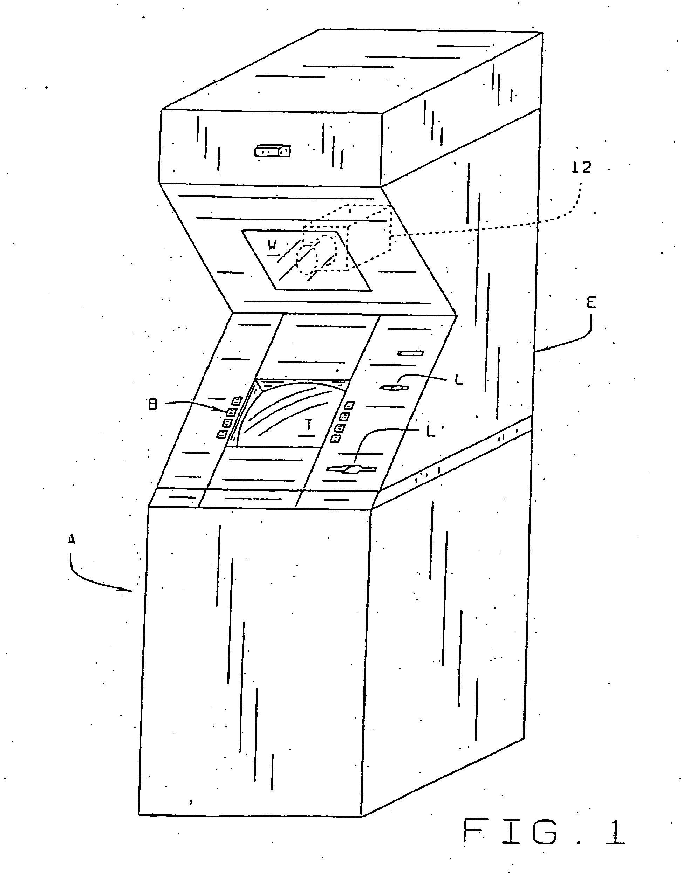

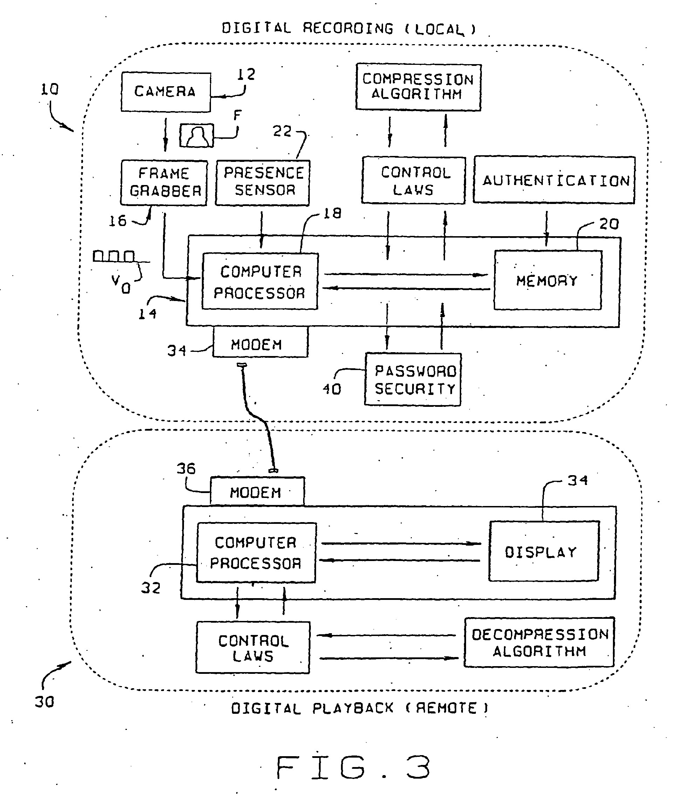

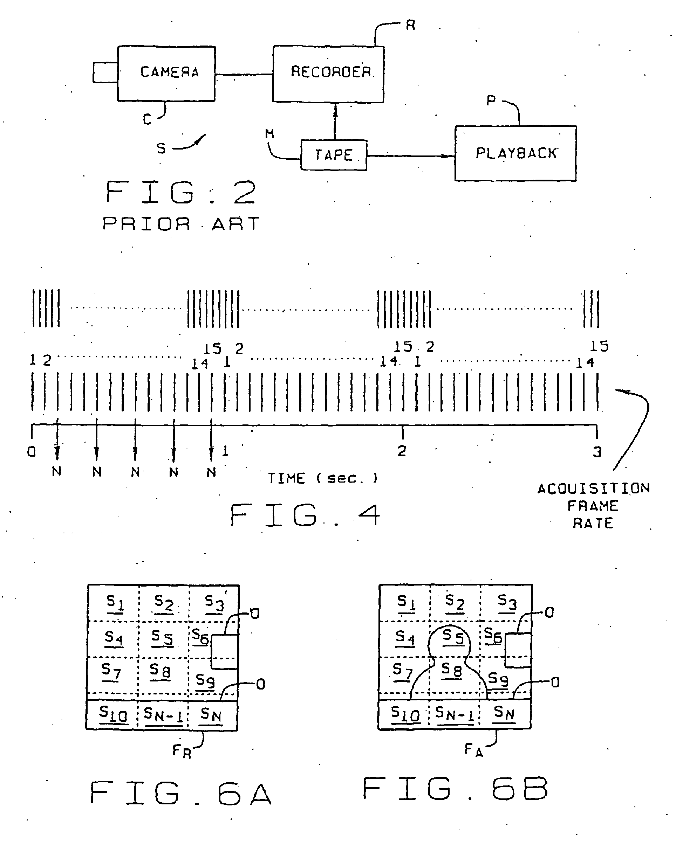

As shown in Figure 3, a digital video recording system which falls outside the scope of the present invention is indicated generally 10. The system first includes a camera 12 which can be a conventional video camera. An example of the use of camera 12 is shown in Figure 1. An ATM machine A comprises an enclosure E. A monitor T, slot L for insertion of a customers ATM card, and pushbuttons B allow the customer to enter transactional information into a cash dispensing system enclosed in the machine. Once a transaction is authorized, cash is dispensed to the customer through a second slot L'. Camera 12 is mounted in the machine above the monitor at a level that allows the camera to obtain a face-on view of the customer. A one-way mirror W is placed in front of the camera. Camera 12 generates video images F at a variable frame rate which is, as shown in Figure 4 for example, 15 frames/sec. The video image produced by the camera comprises an analog signal which is provided as an output from the camera. It will understood by those skilled in the art that while camera 12 typically operates in the visible range of the light spectrum, it does not have to. Camera 12 could, for example, be an infrared camera.

The analog signal produced by camera 12 is transmitted from the ATM machine to an image processor 14 which is remotely located with respect to the machine. A frame grabber 16 is interposed between the camera and image processor. This unit performs two functions. First, as its name suggests, it selects (grabs) frames of video from the stream of video transmitted by the camera. As shown in Figure 4, frame grabber 16 is programmed to select every N^{th} frame of video from the camera. In Figure 4, N = 3; however, N can be any convenient number. In addition, the frame grabber converts the video signal from an analog signal to a digital signal V_{D} capable of being processed by image processor 14.

It will be evident to those skilled in the art that portions of the frame grabber 16 may be modified if the camera 12 directly provides digital output. In that case, the frame grabber may merely be used to capture the desired frames from the incoming stream of digital data. The function of converting the video signal from an analog signal to a digital signal will be unnecessary as the digital video signal V_{D} is provided directly.

In a preferred embodiment, image processor 14 comprises two main elements: a microprocessor 18, and a memory 20. The image processor 14 is effected, for example, using a personal computer (PC) as a platform, and 20 gigabytes of disk memory. Use of a PC enables image processing to be accomplished using any appropriately equipped and programmed computer, whether a desktop, laptop, or other. This greatly enhances the flexibility of the system. The large capacity of memory 20 enables between 50 and 100 days of video imagery to be stored from a single camera 12. Further, unlike conventional video tapes which have a recording (storage) capacity of a but few hours at most, and which is non-expandable, memory 20 is readily expandable.

As represented by Figure 6A, an image obtained by camera 12 is established as a reference against which the contents of subsequently acquired images are compared by the microprocessor 18. The image represented by Figure 6A has, for example, a resolution of 480 pixels by 640 pixels. Microprocessor 18 is configured to divide this image into, for example, 32 pixel by 32 pixel segments S for processing. As shown in Figure 6A, the image is divided into n segments S1, S2, ...Sn-1, Sn. The contents of each image segment may include all or part of objects O which objects are fixed in the scene. In processing the digital image, microprocessor 18 is configured to first compare segment S1 of the reference frame F_{R} with segment S1 of the frame F_{A} being analyzed. If the two frame segments compare with each other, the microprocessor 18 repeats the analysis with the next two corresponding frame segment. In the simplified representations of Figures 6A and 6B, the microprocessor 18 will note the differences in segments S5, and in S7-S9 of the frame F_{A} being compared with the reference frame F_{R}. The processor discards the remaining frame segments in which there were no differences between the two frames, and stores the frame segments where differences appear in the memory 20.

If they do differ, frame segment S1 is marked for later storage. A preferred approach for comparing segments S is to perform a pixel by pixel comparison such that, if any corresponding pixels have an absolute difference in intensity which exceeds a threshold, a count is incremented. If the count of such pixels exceeds a second threshold, the segment is marked as changed. After all the segments S1 through Sn are so examined, the marked frame segments where differences appear are stored in memory 20.

It will be apparent that other methods for determining the difference between two frame segments may be utilized without fundamentally altering the process of detecting and storing only those frame segments which have differences. For example, in images from non-visual detectors, a pseudo color representation of the scene may be made such that changes in color are appropriate to use to detect segment differences. Other algorithms may be employed which do not modify the basic object of the invention which is to detect changed macro blocks and only store those changed macro blocks and the corresponding reference images in memory 20 in order to increase the data storage compression efficiency.

Image processor 14 periodically updates the reference image against which newly acquired frames F_{A} are compared. Because the system is typically used for security monitoring purposes, it is inefficient for the system to react to every change which may occur in the scene observed by the camera. For example, if the camera in the ATM machine of Figure 1 observes vehicles or passersby in the vicinity of the machine, it is not necessarily important that their passage be noted. These background changes are not important. What is important are changes in the area immediate the machine.

It is evident from the previous description that the amount of data recorded will be greatly reduced if the reference image F_{R} contains only background data such that if an image F_{A} contains the same objects O, nothing will be stored. It is also necessary to account for system memory requirements and time elapsed since the last reference image when deciding when to update the reference image. Thus, a preferred algorithm for determining when to update the reference image Fr is as follows.

Let N be the number of segments S in any image be N. Further, let M be the number of segments S saved from all Fa since the last reference frame. Then do the following:

```
        If (time since last reference frame > 15 minutes) or (M > 40 times
               N) then
               take a new reference frame, Fr
        else if (time since last reference frame > 10 minutes) or (M > 20
               times N) then
               if the current frame Fa has not changed compared to the
                      previous frame Fa by more than 5 segments then
                     take a new reference frame, Fr
               end if
        end if.
```

Thus, a new reference frame is taken a minimum of every 15 minutes or when the storage exceeds 40 times N. A new reference is also taken if the last two frames Fa are nearly identical and the time since the last reference frame Fr is at least 10 minutes or the storage is at least 20 times N. Typically, a new reference will be taken whenever there is little change between two images. This corresponds to the condition that only background objects O are in the reference image. The specific times selected and the amount of storage selected are dependent on the characteristics of processor 14 and so will change depending on the specific implementation.

The periodic updating of the reference image in the manner described will minimize the amount of storage required for long periods of inactivity in the scene which camera 12 is monitoring. Only when a change in image is detected will the corresponding segments S be recorded. However, in some situations, the camera view may include areas which are not of primary interest such as background traffic in a store in which the enclosure E is situated. In some installations it will be desired by the users of the system to record this activity and in other situations the users of the system will be more interested in maximizing the storage and not recording the extra information. The background traffic may be of interest if the user wishes to determine what activity occurred immediately before an incident. For example, if the enclosure E is vandalized it would be advantageous to maintain the recording of activity preceding the time period of the damage. In other situations, there may be auxiliary cameras which can adequately provide these details such that the only desired recording for camera 12 is that of people which approach the enclosure E. Accordingly, the system may optionally incorporate a presence sensor 22 which signals the processor when, for example, someone approaches the machine. This signal may be used by the processor to only record segments S when the sensor indicates someone in close proximity to the monitor T.

Optionally, the system 10 may incorporate a presence sensor 22 which signals the processor when, for example, someone approaches the machine. At that time, the image processor 14 responds by refreshing the reference image F_{R}, and comparing subsequence image frames with the refreshed image F_{R}.

In storing the digital video images in memory 20, image processor 14 performs a number of functions. To conserve space in memory 20, the video image is exercised using a compression algorithm which minimizes the amount of information required to be stored, while at the same time insuring that none of the information contained in the image is lost so a high resolution image is always available for viewing. The compression algorithm is used in conjunction with certain control rules which establish the format for storing information in memory 20, and retrieving it from the memory. For different applications, different compression algorithms are used and the particular algorithm for the attendant application is established by the control laws portion of the processor.

Further, all stored video images are date and time stamped with the time of day and the date on which the image was recorded. This information is encoded as digital data appended to the other digital data representing the image which is stored in the memory with the image contents. In addition the images can also be stamped with a transaction identification (ID) obtained from an associated device. For example, a transaction ID produced when a user performs a specific action such as inserting an ATM card in slot L may be produced. A search of the recorded video can then be directed to the location where the ID is stored.

Optionally, an authentication algorithm is also exercised on the data stored in the memory. Authentication of video images is described in U.S. Patent No. 5,870,471, herein incorporated by reference, which is assigned to the same assignee as the present application. Authentication is important for evidentiary purposes in that it prevents someone from tampering with the contents of an image without the tampering being readily detected. The authentication algorithm not only provides an immediate indication of tampering, but also provides information as to which part of the image has been tampered with. It will be understood that not every stored image need be authenticated.

After a video image has been processed and its contents stored, the image remains in memory 20 until it is recalled for playback. Since the memory has a large capacity, the image is stored for a substantial period of time; for example, 50-100 days. When memory 20 is full, image processor 14 will begin to overwrite the images previously stored, beginning with that image which was first stored. This "first-in, first-out" procedure insures that the more recent images are retained while those which are probably unimportant (since they have not been recalled for viewing during the 50-100 day interval) are deleted. It will be noted that this is in sharp contrast to current video recording systems in which tapes are constantly being reused so that if the importance of a recorded image is not immediately recognized, it has a good chance of being permanently lost.

System 10 further includes a digital playback capability which is indicated generally 30 in Figure 3. The playback portion of the system includes a processor 32 which again is based on a PC platform. Importantly, the playback portion of the DVR system can be remote from the image processing portion of the system. Accordingly, a modem 34, 36 is located with the respective processors for transmitting commands and data back and forth between them. Transmission is via a standard telecommunications line and image date is transferred at a rate of 56.6 kbps, for example. Processor 32 accesses disk memory 20 through the image processor 14 via the modem link. Digital images are then transmitted from the memory via the modem link to processor 32. This processor has an associated display 34 (a television monitor or computer screen, for example) on which the images are viewed. Since the stored images are compressed images, the images received by processor 32 are first decompressed before being viewed. For this purpose, the digital images are first operated on by a decompression algorithm. As shown in Figure 3, the decompression algorithm is also subject to certain control laws which determine which algorithm of a plurality of algorithms are used. After being decompressed by the appropriate algorithm, the reconstituted image is displayed, the image being the high resolution image presenting substantial detail to the viewer.

The above described prior art system has several important features over other conventional recording systems. First, microprocessor 18 and memory 20 can be remote from the location at which the camera is installed. In addition, the processor 32 and display 34 can be remote from microprocessor 18 and memory 20. Second, the rate at which stored frames of video are acquired from the memory and displayed can be a substantially different than those at which the video images are processed. Third, the playback feature of the system is used simultaneously with the image processing and storage feature. Fourth, stored images are time and date stamped so the processor in the playback portion can go directly to the location in the memory where images are stored to retrieve them so there is no need to sequentially scan the memory. Fifth, stored images retrieved from memory 20 can be downloaded to other media with the superior visual qualities of the digital images being maintained.

Because the images are recorded in a digital format, off-loading or downloading images from memory 20 to another memory, regardless of the media in which that is done (diskette, tape, etc.), is accomplished without the loss of quality of the image. Generating multiple copies of the recorded image can also be done without affecting the quality of the image. Not only can the downloading be done to different media, but the rate at which this is done is variable from medium to another, and this can also be done while the system continues to process new images and store them in the memory.

Finally, system 10 includes a security system 40 preventing unauthorized persons from accessing the system. System 40 includes, for example, a password security feature which prevents one access to the system unless they possess the appropriate password. As is well-known in the art, such a system requires the user to, for example, type their password into a comparator which matches the entry against authorized passwords and allows the user access only if there is a match.

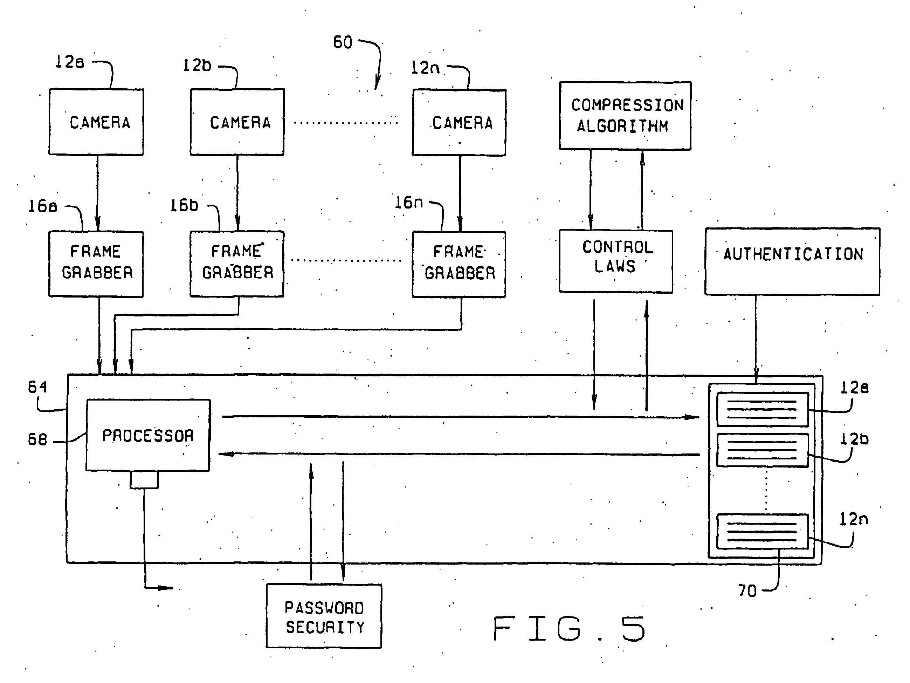

Referring now to Figure 5, an embodiment of the system of the present invention is indicated generally 60. System 60 includes a plurality of cameras 12a-12n, each observing different scenes or different aspects of the same scene. Each camera 12a-12n has an associated frame grabber 16a-16n for converting incoming video signals V_{A}-V_{N} to digital signals V_{DA}-V_{DN}. It will be appreciated that different camera/frame grabber pairs may operate at different frame rates and that an image processor 64 of the system accommodates all the frame rates for processing purposes.

It will be evident to those skilled in the art that portions of the frame grabbers 16a-16n may be modified if the cameras 12a-12n directly provide digital output. In that case, the frame grabbers may merely be used to capture the desired frames from the incoming stream of digital data, or may be eliminated completely. The function of converting the video signal from an analog signal to a digital signal will be unnecessary as the digital video signals V_{DA}- V_{DN} are provided directly.

Image processor 64 includes a PC based microprocessor 68 and an associated memory 70. The microprocessor 68 processes the digital signals V_{DA} through V_{DN} and compares the video image represented thereby with a reference frame V_{RA} through V_{RN} for the corresponding scene being observed.

After processing, each digital signal is stored in memory 70 after first being compressed using an appropriate compression algorithm. It will be understood that different compression algorithm may be used for all the images stored in the memory; or that a different compression algorithm may be used for each image from a different observed scene.

In memory 70, the images from the cameras are assigned .their own memory space. Thus, as shown in Fig. 5, all images from camera 12a are stored contiguously in one section of memory, all images from camera 12b are stored contiguously in another section of memory, and so forth with each cameras images having its own storage area. In this way, the cameras can have different frame capture rates and can have different amounts of storage allocated to the camera. This allows for different amounts of storage for each camera. For example, in the case of a two camera system with cameras 12a and 12b, 60% of the storage could be allocated to camera 12a and 40% of the storage could be allocated to camera 12b. Assuming the cameras are viewing similar scenes, assigning the same frame capture rate and compression technique to both cameras will result in the ability to store 50% more data for camera 12a than for camera 12b. Alternatively, if the frame capture rate for camera 12a is made 1.5 times as great as that for camera 12b then the allocated storage area will accommodate the same number of days of storage for both cameras.

The separate storage of images from each camera also facilitates the retrieval of image data by playback system 30. An operator may request the data from an individual camera and it is readily available from its assigned storage area.

Those of ordinary skill in the art will recognize that alternative storage methods for multiple video images are possible. For example, in the memory 70, the images from the cameras may be interleaved. In interleaved storage, an image from camera 12a is stored in the memory, then an image from camera 12b, and so forth until an image from camera 12n. The storage cycle is then repeated. Again, it will be understood that this order is exemplary only and that the order in which the images are stored is a function of the actual sequence in which the images are processed. If a particular camera produces images at a frame rate significantly greater than that of another camera, images from the one camera will be stored more frequently than those from the other. Or, if one camera is shut down while others remain operating, only the frames from the operating camera are interleaved.

Another feature of the recording system 60 is the ability to manipulate the input images to form a multiplex of several images for storage. In this manner, if it is desired to see what happens in several views simultaneously, only a single image need to be stored, retrieved, and viewed. For example, the images V_{DA}, V_{DB}, V_{DC}, and V_{DD} produced from cameras 12a, 12b, 12c, and 12d may all be reduced to one quarter their normal size. These one quarter size images may then be combined into a single full size image by placing V_{DA} in the upper left corner, V_{DB} in the upper right comer, V_{DC} in the lower left corner, and V_{DD} in the lower right corner. The normal compression and storage of this composite image may then be performed. A separate storage area in memory 70 may be assigned for the composite image. In addition, if desired, the original full size images may be stored in their own assigned storage areas. It will be understood that many such combinations may be made and are limited only by the controls made available to the operator of the system.

As with system 10, system 60 includes security system 40 to prevent unauthorized persons from accessing the system.

Although not shown in Figure 5, system 60 includes a playback capability similar to that of system 10. Operation of the playback portion of the system is similar to that previously described. It will appreciated that, as with the playback portion of system 10, microprocessor 68 and memory 70 are remote from the locations where playback occurs. Again, the rates at which stored frames of video are obtained from memory 70 are different than the rates at which the video images are processed by microprocessor 68 and images are played back simultaneously with newly acquired images being processed and stored. Since the stored images are time and date stamped, the processor of the playback portion of the system can go directly to their storage location in the memory to retrieve the images.

Any images to be replayed are either reference images, which may be retrieved, decompressed, and displayed directly, or changed image blocks, which must be combined with a reference image to produce an image at the time requested. The combining of changed image blocks with the reference image blocks is performed by decompressing the reference image, decompressing the changed image blocks from the subsequent image, and then replacing the corresponding image blocks in the reference image with the changed image blocks from the subsequent image. In order to determine which blocks in the reference image must be replaced, an associated block map is stored for each group of changed image blocks which determines their location in the reference image. A preferred map is to keep a binary representation of all the blocks in the image such that a single bit in the memory map determines if each block is changed or unchanged. For example, a 0 in the map may indicate an unchanged block and a 1 a changed block. Thus, there are as many bits in the image map as there are blocks in each digital image. The image map bits may be stored in order to correspond to a position in the image. For example, starting at the upper left corner of the image and provide the first bit in the image map as corresponding to this location. Subsequent bits may then correspond in order to the blocks proceeding from the upper left corner to the upper right corner and then from the left side of the second row to the right side of the second row and so forth until the entire image is accounted for. For a 640 by 480 pixel image divided into blocks of 32 pixels by 32 pixels, this will result in 20 blocks across the image and 20 bits in the image map corresponding to the top row of blocks. There are then 15 rows of blocks and consequently a total of 20 times 15 or 300 bits required in the image map. The resulting image map so described may be stored directly or may be compressed to conserve storage space in memory.

As any individual image may be recreated by retrieving the changed macro blocks and the corresponding reference image, it is evident that this process facilitates all the normal replay functions such as forward play, reverse play, fast forward, fast reverse, pause, etc. In addition, using the transaction ID associated with corresponding images it is evident that a transaction ID may be found and the corresponding image displayed without having to replay any other images.

Finally, the stored images can be downloaded from the memory 70 to other storage media, such as tapes, CD-ROMs, or other magnetic media without loss in the quality of the image.

What has been described is a DVR system for recording financial transactions or other important occurrences. The system employs a video camera and an image processor having a memory capability. The system captures, processes and stores video images, and maintains the high resolution (quality) of the stored image regardless of how much times lapses before the image is viewed, and how often the image is viewed. Review of a stored image can be done while the system continues to acquire and process new images. The use of image compression greatly increases the memory storage capability of the system, and image compression ratios are not constant but vary as a function of the aspect of the object viewed and other factors. Recorded images are time and date stamped and authenticated for future usage. The system is expandable for use with multiple cameras and processors and with an expandable memory.

In view of the foregoing, it will be seen that the several objects of the invention are achieved and other advantageous results are obtained.

## Claims

1. A digital video recording system (60) employing at least one camera (12a-12n) directed at a scene of interest to view the scene and to continuously generate a plurality of video images (F) thereof with each of said video images (F) comprising a plurality of pixel elements, said system comprising;
an image processor (64) for processing the video images (F) for the at least one camera (12a-12n), the image processor (64) establishing a first video image as a reference image (Fr) against which the contents of subsequent video images (F) are compared, the image processor (64) dividing the reference image (Fr) and the subsequent video images (F) into a plurality of segments (S1-Sn) with each segment being comprised of a block of pixels, the image processor (64) then comparing the block of pixels comprising a segment (S1-Sn) of each subsequent video image (F) against the block of pixels forming the corresponding segment (S1-Sn) of the reference image (Fr) of said scene to determine if any changes have occurred in the scene, the processor (64) being configured to identify which of said segments (S1-Sn) in said video images (F) have changed relative to the corresponding segments (S1-Sn) of the reference image (Fr);
a memory (70) in which is stored the contents of the reference image (Fr) and the segments (S1-Sn) of any subsequent video image (Fr) identified by the image processor (14) as indicative of a change in the scene, the subsequent video images (F) being identified as to the time at which the video image (F) was obtained by the camera (12), and the contents of each video image (F) stored in said memory (70) being authenticated so as to insure that its contents cannot be subsequently tampered without evidence of any tampering not becoming known, authentication data for each video image (F) stored in said memory (70) being stored with the contents of each video image (F); and
display means (34) for displaying any subsequent video images (F) stored in said memory (70) with said image processor (14) being further configured to access said memory (70) to retrieve any stored subsequent video images (F) for display on the display means (34), said image processor (64) accessing the contents of said memory (70) at any desired memory location representing a time of interest so as not to have to scan the stored video images (F) to locate the video image obtained at the time of interest, said image processor (64) configured to access the contents of said memory (70) without interrupting processing of currently acquired video images (F), and with the display means (34) displaying the video images at a first frame rate while the image processor (64) is simultaneously processing new video images obtained by said camera (12) at a second and different frame rate; **characterised in that** the system (60) includes a plurality of cameras (12a-12n) directed to view at least one scene, image data from each camera (12a-12n) being stored in a separate storage area of the memory (70), and **in that** the image processor (64) is configured to compare said plurality of video images (F) generated by said cameras (12a-12n) with a plurality of previously established reference images (Fr) of said scene to identify any regions of change therein, said processor (64) configured to store the contents of the reference images (Fr) and the contents of only those regions of said video images (F) which differ from a corresponding region of the reference images (Fr) in the storage area of the memory (70) associated with the respective cameras (12a-12n), said image processor (64) being further configured to access said memory (70) to retrieve at least one video image of interest produced by said cameras (12a-12n).

2. A system of claim 1, wherein each said camera (12) is an analog video camera operating in either the visible light spectrum or the infrared light spectrum.

3. A system of claim 2, further including a frame grabber (16a-16n) associated with each camera (12a-12n) for capturing each video, image (F) obtained by said cameras (12) and generating a digital signal representative thereof.

4. A system of claim 1, wherein each said camera (12a-12n) is a digital video camera operating in either the visible light spectrum or the infrared light spectrum.

5. A system of claim 1, wherein said image processor (64) is programmed to periodically replace an established reference image (Fr) of the scene against which subsequent video images are compared with a new reference image (Fr) against, which video images (F) obtained subsequent to establishment of the new reference image (Fr) are now compared.

6. A system of claim 1, wherein said image processor (64) is remote from said memory (70) and said system includes a transmission means for transmitting video images (F) between said image processor (64) and said memory (70)

7. A system of claim 1, further including an event identifier (22) which provides event identification data to said image processor (64), said image processor (64) configured to associate said event identification data with said video images (F), generated by said camera (12a-12n).

8. A system of claim 1, wherein said image processor (64) is configured to compress the contents of said reference image (Fr) and those segments (S1-Sn) of subsequent video Images stored in said memory (70) so to maximize the storage capability of said memory (70).

9. A system according to any of the preceding claims, wherein said Image processor (64) is further configured to access said memory (70) to retrieve a plurality of video images (F) of interest produced by said cameras (12a-12n).

10. A system according to any of the preceding claims, wherein said image processor (64) is configured to generate a combined video image from said plurality of video images (F) generated by the respective cameras (12a-12n) and to compare said combined video image with a combined reference image composed of a plurality of reference images (Fr) of said at least one scene.

11. A digital video' recording system of claim 1, wherein video image data representative of identified changes in said scene includes at least one changed segment (S1-Sn) from a video image (F) together with a reference image (Fr) associated block map, said reference image (Fr) associated block map including at least one binary representation of a corresponding segment (S1-Sn) of said video image (F), a first binary representation indicating an unchanged segment (S1-Sn), and a second, binary representation indicating a changed segment (S1-Sn), with the position of a second binary representation in said block map indicating the position of said changed segment (S1-Sn) in said video image (F).

12. A system of claim 1, wherein said video image data representative of identified changes is compressed prior to storage in said memory (70).

13. A system of claim 12, wherein said video image data representative of identified changes includes transaction identification information.

14. A system of claim 13, wherein said image processor (14) is further configured to reconstruct a video image (F) of a changed scene by extracting said previously established reference video image (Fr) together with said video image data representative of said identified changes in said scene from said memory (70).

15. A method of recording video images (F) and storing and retrieving the same using the digital video recording system of according to any of the preceding claims, said method comprising:
viewing a scene of interest with a plurality of cameras (12a-12n) and generating video images (F) thereof;
converting each frame of video imagery produced by said cameras (12a-12n) and generating video images (F) thereof as a digital signal;
processing said digital signal, said processing including
comparing segments (S1-Sn) of each said video image (F) with corresponding segments (S1-Sn) of a previously established reference image (Fr) of the scene to determine if any changes have occurred in any of the segments (S1-Sn), and storing the contents of said segments (S1-Sn) in which differences have occurred in a storage area of a memory (70), said storage area being associated with the camera from which the signal was captured, date and time information being appended to each stored video image (F);
authenticating the contents of each video image (F) stored in said memory (70) so as to insure that its contents cannot be subsequently tampered without evidence of any tampering not becoming known, authentication data for each video image (F) stored in said memory (70) being stored with the contents of each video image (F); and
accessing said memory (70) to retrieve the contents of said digital signals to recreate the video images (F) simultaneously with digital signals being stored therein, and said memory (70) being accessed at any desired location there within representing a time of interest whereby video images (F) stored in said memory (70) do not have to be sequentially scanned to locate a video image of interest, and whereby said video images (F) are acquired from said at least one camera (12a-12n) at one frame rate and from said memory (70) at a second and different frame rate.

16. A method of claim 15, wherein each camera (12a-12n) is directed at a respective scene of interest, and the method further includes each camera (12a-12n) continuously viewing each respective scene and generating video image (F) thereof at a predetermined frame rate, converting each frame of video image (F) from each camera (12a-12n) to a signal, processing each digital signal and storing the processed video images (F) in said separate storage area of said a memory (70).

17. A method of claim 16, wherein a processor (64) is configured to update the reference image (Fr) against which said digital signals are compared.

## Patentansprüche

1. Digitales Videoaufzeichnungssystem (60), das mindestens eine Kamera (12a-12n) einsetzt, die auf eine interessierende Szene gerichtet ist, um die Szene zu betrachten und um kontinuierlich eine Vielzahl von Videobildern (F) davon zu erzeugen, wobei jedes der Videobilder (F) eine Vielzahl von Bildpunktelementen umfasst, das System umfassend:
einen Bildprozessor (64) zum Verarbeiten der Videobilder (F) für die mindestens eine Kamera (12a-12n), wobei der Bildprozessor (64) ein erstes Videobild als ein Referenzbild (Fr) einrichtet, mit dem die Inhalte anschließender Videobilder (F) verglichen werden, wobei der Bildprozessor (64) das Referenzbild (Fr) und die anschließenden Videobilder (F) in eine Vielzahl von Segmenten (S1-Sn) aufteilt, wobei jedes Segment aus einem Block von Bildpunkten besteht, wobei der Bildprozessor (64) dann den Block von Bildpunkten, der ein Segment (S1-Sn) jedes anschließenden Videobilds (F) umfasst, mit dem Block von Bildpunkten, der das korrespondierende Segment (S1-Sn) des Referenzbilds (Fr) der Szene bildet, vergleicht, um zu bestimmen, ob irgendwelche Veränderungen in der Szene vorgekommen sind, wobei der Prozessor (64) konfiguriert ist, zu identifizieren, welche der Segmente (S1-Sn) in den Videobildern (F) sich relativ zu den korrespondierenden Segmenten (S1-Sn) des Referenzbilds (Fr) verändert haben;
einen Speicher (70), in dem die Inhalte des Referenzbilds (Fr) und die Segmente (S1-Sn) eines etwaigen anschließenden Videobilds (Fr), das von dem Bildprozessor (14) als eine Veränderung in der Szene anzeigend identifiziert wurde, gespeichert werden, wobei die anschließenden Videobilder (F) zu der Zeit identifiziert werden, zu der das Videobild (F) von der Kamera (12) erhalten wurde, und wobei die Inhalte jedes in dem Speicher (70) gespeicherten Videobilds (F) authentifiziert werden, um zu gewährleisten, dass seine Inhalte nicht anschließend manipuliert werden können, ohne dass ein Nachweis einer Manipulation nicht bekannt wird, wobei Authentifizierungsdaten für jedes in dem Speicher (70) gespeicherte Videobild (F) mit den Inhalten jedes Videobilds (F) gespeichert werden; und
Anzeigemittel (34) zum Anzeigen etwaiger anschließender Videobilder (F), die in dem Speicher (70) gespeichert sind, wobei der Bildprozessor (14) ferner konfiguriert ist, auf den Speicher (70) zuzugreifen, um etwaige gespeicherten anschließenden Videobilder (F) zur Anzeige auf dem Anzeigemittel (34) abzurufen, wobei der Bildprozessor (64), der auf die Inhalte des Speichers (70) an einem gewünschten Speicherplatz, der eine interessierende Zeit repräsentiert, zugreift, um die gespeicherten Videobilder (F) nicht abtasten zu müssen, um das zur interessierenden Zeit erhaltene Videobild zu lokalisieren, wobei der Bildprozessor (64) konfiguriert ist, auf die Inhalte des Speichers (70) zuzugreifen, ohne die Verarbeitung der gegenwärtig erfassten Videobilder (F) zu unterbrechen, und wobei das Anzeigemittel (34) die Videobilder bei einer ersten Rahmenrate anzeigt, während der Bildprozessor (64) gleichzeitig von der Kamera (12) erhaltene neue Videobilder bei einer zweiten und verschiedenen Rahmenrate verarbeitet; **dadurch gekennzeichnet, dass** das System (60) eine Vielzahl von Kameras (12a-12n) enthält, die gerichtet sind, um mindestens eine Szene zu betrachten, wobei Bilddaten von jeder Kamera (12a-12n) in einem separaten Speicherbereich des Speichers (70) gespeichert werden, und dadurch, dass der Bildprozessor (64) konfiguriert ist, die Vielzahl der von den Kameras (12a-12n) erzeugten Videobilder (F) mit einer Vielzahl von vorher eingerichteten Referenzbildern (Fr) der Szene zu vergleichen, um etwaige Regionen der Veränderung darin zu identifizieren, wobei der Prozessor (64) konfiguriert ist, die Inhalte der Referenzbilder (Fr) und die Inhalte nur derjenigen Regionen der Videobilder (F), die sich von einer korrespondierenden Region der Referenzbilder (Fr) in dem mit den jeweiligen Kameras (12a-12n) assoziierten Speicherbereich des Speichers (70) unterscheiden, zu speichern, wobei der Bildprozessor (64) ferner konfiguriert ist, auf den Speicher (70) zuzugreifen, um mindestens ein von den Kameras (12a-12n) produziertes interessierendes Videobild abzurufen.

2. System nach Anspruch 1, wobei jede Kamera (12) eine analoge Videokamera ist, betrieben in entweder dem sichtbaren Lichtspektrum oder dem Infrarot-Lichtspektrum.

3. System nach Anspruch 2, ferner enthaltend einen mit jeder Kamera (12a-12n) assoziierten Rahmengrabber (16a-16n) zum Erfassen jedes von den Kameras (12) erhaltenen Videobilds (F) und Erzeugen eines dieses repräsentierenden Digitalsignals.

4. System nach Anspruch 1, wobei jede Kamera (12a-12n) eine digitale Videokamera ist, betrieben in entweder dem sichtbaren Lichtspektrum oder dem Infrarot-Lichtspektrum.

5. System nach Anspruch 1, wobei der Bildprozessor (64) programmiert ist, ein eingerichtetes Referenzbild (Fr) der Szene, mit dem anschließende Videobilder verglichen werden, regelmäßig durch ein neues Referenzbild (Fr), mit dem Videobilder (F), die anschließend an die Einrichtung des neues Referenzbilds (Fr) erhalten werden, jetzt verglichen werden, zu ersetzen.

6. System nach Anspruch 1, wobei der Bildprozessor (64) von dem Speicher (70) entfernt ist und das System ein Übertragungsmittel zum Übertragen von Videobildern (F) zwischen dem Bildprozessor (64) und dem Speicher (70) enthält.

7. System nach Anspruch 1, ferner enthaltend eine Ereignisidentifizierungsvorrichtung (22), die dem Bildprozessor (64) Ereignisidentifizierungsdaten bereitstellt, wobei der Bildprozessor (64) konfiguriert ist, die Ereignisidentifizierungsdaten mit den von der Kamera (12a-12n) erzeugten Videobildern (F) zu assoziieren.

8. System nach Anspruch 1, wobei der Bildprozessor (64) konfiguriert ist, die Inhalte des Referenzbilds (Fr) und diejenigen Segmente (S1-Sn) der anschließenden Videobilder, die in dem Speicher (70) gespeichert sind, zu komprimieren, um die Speicherkapazität des Speichers (70) zu maximieren.

9. System nach einem der vorstehenden Ansprüche, wobei der Bildprozessor (64) ferner konfiguriert ist, auf den Speicher (70) zuzugreifen, um eine Vielzahl von interessierenden Videobildern (F), erzeugt von den Kameras (12a-12n), abzurufen.

10. System nach einem der vorstehenden Ansprüche, wobei der Bildprozessor (64) konfiguriert ist, ein kombiniertes Videobild aus der Vielzahl von Videobildern (F), erzeugt von den jeweiligen Kameras (12a-12n), zu erzeugen und das kombinierte Videobild mit einem kombinierten Referenzbild, zusammengesetzt aus einer Vielzahl von Referenzbildern (Fr) der mindestens einen Szene, zu vergleichen.

11. Digitales Videoaufzeichnungssystem nach Anspruch 1, wobei Videobilddaten, die identifizierte Veränderungen in der Szene repräsentieren, mindestens ein verändertes Segment (S1-Sn) aus einem Videobild (F) zusammen mit einer mit einem Referenzbild (Fr) assoziierten Blockabbildung enthalten, wobei die mit dem Referenzbild (Fr) assoziierte Blockabbildung mindestens eine binäre Repräsentation eines korrespondierenden Segments (S1-Sn) des Videobilds (F) enthält, wobei eine erste binäre Repräsentation ein unverändertes Segment (S1-Sn) angibt und eine zweite binäre Repräsentation ein verändertes Segment (S1-Sn) angibt, wobei die Position einer zweiten binären Repräsentation in der Blockabbildung die Position des veränderten Segments (S1-Sn) in dem Videobild (F) angibt.

12. System nach Anspruch 1, wobei die Videobilddaten, die identifizierte Veränderungen repräsentieren, vor der Speicherung in dem Speicher (70) komprimiert werden.

13. System nach Anspruch 12, wobei die Videobilddaten, die identifizierte Veränderungen repräsentieren, Transaktionsidentifizierungsinformationen enthalten.

14. System nach Anspruch 13, wobei der Bildprozessor (14) ferner konfiguriert ist, ein Videobild (F) einer veränderten Szene durch Extrahieren des vorher eingerichteten Referenzvideobilds (Fr) zusammen mit den Videobilddaten, die die identifizierten Veränderungen in der Szene repräsentieren, aus dem Speicher (70) zu rekonstruieren.

15. Verfahren zum Aufzeichnen von Videobildern (F) und Speichern und Abrufen derselbigen unter Verwendung des digitalen Videoaufzeichnungssystems nach einem der vorstehenden Ansprüche, das Verfahren umfassend:
Betrachten einer interessierenden Szene mit einer Vielzahl von Kameras (12a-12n) und Erzeugen von Videobildern (F) davon;
Umwandeln jedes Rahmens des von den Kameras (12a-12n) produzierten Videobildmaterials und Erzeugen von Videobildern (F) davon als ein digitales Signal;
Verarbeiten des digitalen Signals, das Verarbeiten enthaltend
Vergleichen von Segmenten (S1-Sn) jedes der Videobilder (F) mit korrespondierenden Segmenten (S1-Sn) eines vorher eingerichteten Referenzbilds (Fr) der Szene, um zu bestimmen, ob irgendwelche Veränderungen in einem der Segmente (S1-Sn) vorgekommen sind, und Speichern der Inhalte der Segmente (S1-Sn), in denen Unterschiede vorgekommen sind, in einem Speicherbereich eines Speichers (70), wobei der Speicherbereich mit der Kamera assoziiert wird, von der das Signal erfasst wurde, wobei Datums- und Zeitinformationen an jedes gespeicherte Videobild (F) angefügt werden;
Authentifizieren der Inhalte jedes in dem Speicher (70) gespeicherten Videobilds (F), um zu gewährleisten, dass seine Inhalte nicht anschließend manipuliert werden können, ohne dass ein Nachweis einer Manipulation nicht bekannt wird, wobei Authentifizierungsdaten für jedes in dem Speicher (70) gespeicherte Videobild (F) mit den Inhalten jedes Videobilds (F) gespeichert werden; und
Zugreifen auf den Speicher (70), um die Inhalte der digitalen Signale abzurufen, um die Videobilder (F) gleichzeitig mit darin gespeicherten digitalen Signalen wieder zu erstellen, und wobei auf den Speicher (70) an jedem gewünschten Platz darin, der eine interessierende Zeit repräsentiert, zugegriffen wird, wobei in dem Speicher (70) gespeicherte Videobilder (F) nicht aufeinanderfolgend abgetastet werden müssen, um ein interessierendes Videobild zu lokalisieren, und wobei die Videobilder (F) von der mindestens einen Kamera (12a-12n) bei einer Rahmenrate und aus dem Speicher (70) bei einer zweiten und verschiedenen Rahmenrate erfasst werden.

16. Verfahren nach Anspruch 15, wobei jede Kamera (12a-12n) auf eine jeweilige interessierende Szene gerichtet ist und das Verfahren ferner enthält, dass jede Kamera (12a-12n) kontinuierlich jede jeweilige Szene betrachtet und ein Videobild (F) dabei bei einer im Voraus bestimmten Rahmenrate erzeugt, jeder Rahmen des Videobilds (F) von jeder Kamera (12a-12n) in ein Signal umgewandelt wird, jedes digitale Signal verarbeitet wird und die verarbeiteten Videobilder (F) in dem separaten Speicherbereich des Speichers (70) gespeichert werden.

17. Verfahren nach Anspruch 16, wobei ein Prozessor (64) konfiguriert ist, das Referenzbild (Fr), mit dem die digitalen Signale verglichen werden, zu aktualisieren.

## Revendications

1. Système d'enregistrement vidéo numérique (60) employant au moins une caméra (12a-12n) dirigée vers une scène d'intérêt afin de visualiser la scène et de générer en continu une pluralité d'images vidéo (F) de celle-ci, alors que chacune desdites images vidéo (F) comporte une pluralité d'éléments de pixel, ledit système comprenant :
un processeur d'images (64) pour traiter les images vidéo (F) pour ladite au moins une caméra (12a-12n), le processeur d'images (64) établissant une première image vidéo à titre d'image de référence (Fr) par rapport à laquelle le contenu d'images vidéo ultérieures (F) est comparé, le processeur d'images (64) divisant l'image de référence (Fr) et les images vidéo ultérieures (F) en une pluralité de segments (S1-Sn), alors que chaque segment est composé d'un bloc de pixels, le processeur d'images (64) comparant ensuite le bloc de pixels comportant un segment (S1-Sn) de chaque image vidéo ultérieure (F) par rapport au bloc de pixels constituant le segment correspondant (S1-Sn) de l'image de référence (Fr) de ladite scène afin de déterminer si de quelconques changements sont survenus dans la scène, le processeur (64) étant configuré de façon à identifier lesquels desdits segments (S1-Sn) dans lesdites images vidéo (F) ont changé par rapport aux segments correspondants (S1-Sn) de l'image de référence (Fr) ;
une mémoire (70) dans laquelle sont stockés le contenu de l'image de référence (Fr) et les segments (S1-Sn) de toute image vidéo ultérieure (Fr) ayant été identifiée par le processeur d'images (14) comme indiquant un changement dans la scène, les images vidéo ultérieures (F) étant identifiées du point de vue de l'horaire auquel l'image vidéo (F) a été obtenue par la caméra (12), et le contenu de chaque image vidéo (F) stockée dans ladite mémoire (70) étant authentifié de sorte à veiller à ce que son contenu ne puisse pas être falsifié ultérieurement sans qu'il soit possible de ne pas avoir connaissance de la preuve qu'une quelconque falsification a eu lieu, alors que des données d'authentification pour chaque image vidéo (F) stockée dans ladite mémoire (70) sont stockées avec le contenu de chaque image vidéo (F) ; et
des moyens d'affichage (34) pour afficher toute image vidéo ultérieure (F) stockée dans ladite mémoire (70), alors que ledit processeur d'images (14) est configuré en outre pour accéder à ladite mémoire (70) afin de récupérer toute image vidéo ultérieure stockée (F) en vue d'un affichage sur les moyens d'affichage (34), ledit processeur d'images (64) accédant au contenu de ladite mémoire (70) en un quelconque emplacement de mémoire désiré représentant un horaire d'intérêt de manière à ne pas avoir à balayer les images vidéo stockées (F) afin de localiser l'image vidéo obtenue lors de l'horaire d'intérêt, ledit processeur d'images (64) étant configuré de façon à accéder au contenu de ladite mémoire (70) sans interrompre le traitement des images vidéo (F) actuellement acquises, et alors que les moyens d'affichage (34) affichent les images vidéo suivant une première cadence de trames pendant que le processeur d'images (64) est simultanément en train de traiter de nouvelles images vidéo obtenues par ladite caméra (12) suivant une deuxième cadence de trames, qui est différente ; **caractérisé en ce que** le système (60) inclut une pluralité de caméras (12a-12n) dirigées pour visualiser au moins une scène, alors que des données d'image provenant de chaque caméra (12a-12n) sont stockées dans une zone de stockage séparée de la mémoire (70), et **en ce que** le processeur d'images (64) est configuré de façon à comparer ladite pluralité d'images vidéo (F) générées par lesdites caméras (12a-12n) avec une pluralité d'images de référence (Fr), établies précédemment, de ladite scène afin d'identifier toute région de changement dans celles-ci, ledit processeur (64) étant configuré de façon à stocker le contenu des images de référence (Fr) et le contenu de ces régions seulement desdites images vidéo (F) qui diffèrent d'une région correspondante des images de référence (Fr) dans la zone de stockage de la mémoire (70) associée aux caméras respectives (12a-12n), ledit processeur d'images (64) étant configuré en outre de façon à accéder à ladite mémoire (70) pour récupérer au moins une image vidéo d'intérêt produite par lesdites caméras (12a-12n).

2. Système selon la revendication 1, chacune desdites caméra (12) étant une caméra vidéo analogique opérant soit dans le spectre de la lumière visible, soit dans le spectre de la lumière infrarouge.

3. Système selon la revendication 2, comprenant en outre un dispositif de capture de trames (16a-16n) associé à chaque caméra (12a-12n) pour capturer chaque image vidéo (F) obtenue par lesdites caméras (12) et pour générer un signal numérique représentatif de celle-ci.

4. Système selon la revendication 1, chacune desdites caméra (12a-12n) étant une caméra vidéo numérique opérant soit dans le spectre de la lumière visible, soit dans le spectre de la lumière infrarouge.

5. Système selon la revendication 1, ledit processeur d'images (64) étant programmé pour remplacer périodiquement une image de référence établie (Fr) de la scène, par rapport à laquelle des images vidéo ultérieures sont comparées, avec une nouvelle image de référence (Fr), par rapport à laquelle des images vidéo (F) obtenues après l'établissement de la nouvelle image de référence (Fr), sont maintenant comparées.

6. Système selon la revendication 1, ledit processeur d'images (64) étant distant de ladite mémoire (70), et ledit système incluant un moyen de transmission pour transmettre des images vidéo (F) entre ledit processeur d'images (64) et ladite mémoire (70).

7. Système selon la revendication 1, incluant en outre un identificateur d'événements (22) qui procure des données d'identification d'événements audit processeur d'images (64), ledit processeur d'images (64) étant configuré de façon à associer lesdites données d'identification d'événements auxdites images vidéo (F) générées par ladite caméra (12a-12n).

8. Système selon la revendication 1, ledit processeur d'images (64) étant configuré de façon à compresser le contenu de ladite image de référence (Fr) et de ces segments (S1-Sn) d'images vidéo ultérieures qui sont stockés dans ladite mémoire (70) de sorte à optimiser la capacité de stockage de ladite mémoire (70).

9. Système selon l'une quelconque des revendications précédentes, ledit processeur d'images (64) étant configuré en outre de façon à accéder à ladite mémoire (70) afin de récupérer une pluralité d'images vidéo (F) d'intérêt produites par lesdites caméras (12a-12n).

10. Système selon l'une quelconque des revendications précédentes, ledit processeur d'images (64) étant configuré de façon à générer une image vidéo combinée à partir de ladite pluralité d'images vidéo (F) générées par les caméras respectives (12a-12n), et à comparer ladite image vidéo combinée avec une image de référence combinée laquelle est composée d'une pluralité d'images de référence (Fr) de ladite au moins une scène.

11. Système d'enregistrement vidéo numérique selon la revendication 1, des données d'images vidéo, représentatives de changements identifiés dans ladite scène, incluant au moins un segment changé (S1-Sn) à partir d'une image vidéo (F) en conjonction avec une carte de blocs associée à une image de référence (Fr), ladite carte de blocs associée à une image de référence (Fr) incluant au moins une représentation binaire d'un segment correspondant (S1-Sn) de ladite image vidéo (F), alors qu'une première représentation binaire indique un segment inchangé (S1-Sn) et qu'une deuxième représentation binaire indique un segment changé (S1-Sn), la position d'une deuxième représentation binaire dans ladite carte de blocs indiquant la position dudit segment changé (S1-Sn) dans ladite image vidéo (F).

12. Système selon la revendication 1, lesdites données d'images vidéo, représentatives de changements identifiés, étant compressées avant un stockage dans ladite mémoire (70).

13. Système selon la revendication 12, lesdites données d'images vidéo, représentatives de changements identifiés, incluant des informations d'identification de transactions.

14. Système selon la revendication 13, ledit processeur d'images (64) étant configuré en outre de façon à reconstruire une image vidéo (F) d'une scène changée grâce à l'extraction de ladite image vidéo de référence (Fr), établie précédemment, en conjonction avec lesdites données d'images vidéo représentatives desdits changements identifiés dans ladite scène en provenance de ladite mémoire (70).

15. Procédé d'enregistrement d'images vidéo (F) et de stockage et de récupération de celles-ci grâce à l'utilisation du système d'enregistrement vidéo numérique selon l'une quelconque des revendications précédentes, ledit procédé comprenant les opérations consistant à :
visualiser une scène d'intérêt à l'aide d'une pluralité de caméras (12a-12n) et générer des images vidéo (F) de celle-ci ;
convertir chaque trame d'imagerie vidéo, produite par lesdites caméras (12a-12n) et générer des images vidéo (F) de celle-ci sous la forme d'un signal numérique ;
traiter ledit signal numérique, ledit traitement incluant les actions consistant à :
comparer des segments (S1-Sn) de chacune desdites images vidéo (F) avec des segments correspondants (S1-Sn) d'une image de référence (Fr), établie précédemment, de la scène afin de déterminer si de quelconques changements sont survenus dans l'un quelconque des segments (S1-Sn), et stocker le contenu desdits segments (S1-Sn), dans lesquels des différences sont survenues, dans une zone de stockage d'une mémoire (70), ladite zone de stockage étant associée à la caméra à partir de laquelle le signal a été saisi, alors que des informations relatives à la date et à l'horaire sont annexées à chaque image vidéo stockée (F) ;
authentifier le contenu de chaque image vidéo (F) stockée dans ladite mémoire (70) de sorte à veiller à ce que son contenu ne puisse pas être falsifié ultérieurement sans qu'il soit possible de ne pas avoir connaissance de la preuve qu'une quelconque falsification a eu lieu, alors que des données d'authentification pour chaque image vidéo (F) stockée dans ladite mémoire (70) est stockée avec le contenu de chaque image vidéo (F) ; et
accéder à ladite mémoire (70) afin de récupérer le contenu desdits signaux numériques afin de re-créer les images vidéo (F) en simultanéité avec les signaux numériques qui sont stockés dans celles-ci, et ladite mémoire (70) étant accessible en un quelconque emplacement désiré à l'intérieur de celle-ci, représentant un horaire d'intérêt, ce qui permet par conséquent à des images vidéo (F) stockées dans ladite mémoire (70) de ne pas faire l'objet d'un balayage séquentiel afin de localiser une image vidéo d'intérêt, et ce fait lesdites images vidéo (F) sont acquises à partir de ladite au moins une caméra (12a-12n) suivant une cadence de trames et à partir de ladite mémoire (70) suivant une deuxième cadence de trames, qui est différente.

16. Procédé selon la revendication 15, chaque caméra (12a-12n) étant dirigée vers une scène d'intérêt respective, et le procédé incluant en outre chaque caméra (12a-12n) laquelle visualise en continu chaque scène respective et qui génère une image vidéo (F) de celle-ci suivant une cadence de trames prédéterminée, convertissant chaque trame d'une image vidéo (F) provenant de chaque caméra (12a-12n) en un signal, traitant chaque signal numérique et stockant les images vidéo traitées (F) dans ladite zone de stockage séparée de ladite une mémoire (70).

17. Procédé selon la revendication 16, un processeur (16) étant configuré de façon à mettre à jour l'image de référence (Fr) par rapport à laquelle lesdits signaux numériques sont comparés.
